# EUROPÄISCHE PATENTSCHRIFT

(11) **EP 0 581 061 B1**
(45) Veröffentlichungstag und Bekanntmachung des Hinweises auf die Patenterteilung: **15.05.1996**
(21) Anmeldenummer: 93110744.5
(22) Anmeldetag: 06.07.1993
(51) Int. Cl.: B29C 45/17, F16B 21/10

(54) **Kupplungsvorrichtung für eine Spritzgiessmaschine**
Coupling device for an injection moulding machine
Dispositif d'accouplement pour une machine à mouler par injection

(30) Priorität: 17.07.1992 DE 4223489
(43) Veröffentlichungstag der Anmeldung: 02.02.1994
(73) Patentinhaber: Hemscheidt Maschinentechnik Schwerin GmbH & Co., D-19061 Schwerin (DE)
(72) Erfinder: Sennlaub, Wolfgang, D-42289 Wuppertal (DE)

(56) Entgegenhaltungen:
- EP-A- 0 266 709
- EP-A- 0 450 291
- DE-A- 2 302 211
- DE-A- 2 335 860

## Beschreibung

Die Erfindung betrifft eine Kupplungsvorrichtung für eine Spritzgießmaschine zum lösbaren Verbinden der Antriebswelle mit der Schneckenwelle eines Extruders.

Aus betrieblichen Gründen ist es notwendig, die im Massezylinder dreh- und verschiebbar gelagerte Schneckenwelle auswechselbar anzuordnen. Zum Ankuppeln der Schneckenwelle an die Antriebswelle wird daher eine Kupplungsvorrichtung benötigt, mit der der Auswechselvorgang ohne großen Arbeits- und Zeitaufwand durchgeführt werden kann.

Aus der DE 36 37 897 A 1 ist eine an der Antriebswelle angeordnete Kupplung zum Ankuppeln des mit Längsrippen versehenen Schaftendes der Schneckenwelle bekannt, die federbelastete Klemmbacken aufweist, die in radialer Richtung bewegbar sind und an einer Ringschulter der Welle einrasten können. Zum Öffnen der Kupplung werden die Klemmbacken über beiderseits der Schneckenwelle angeordnete Spreizkeile mittels einer in Achsrichtung verschiebbaren Stellvorrichtung gespreizt und aus der federbelasteten Eingriffsstellung herausbewegt. Diese Kupplungsvorrichtung ist aufwendig aus relativ vielen Bauteilen zusammengesetzt und beansprucht einen großen Einbauraum. Sie benötigt zudem für ihre Funktion Bewegungsraum.

Der vorliegenden Erfindung liegt somit die Aufgabe zugrunde, eine kompakte, aus wenigen Bauteilen zusammengesetzte Kupplungsvorrichtung zu schaffen, deren Sperrorgane mit geringem Aufwand zu betätigen sind.

Diese Aufgabe wird mit den im Patentanspruch 1 angegebenen Merkmalen gelöst. Die vorteilhafte Ausgestaltung der Erfindung ist Gegenstand der Unteransprüche.

Die erfindungsgemäße Kupplungsvorrichtung gewährleistet eine einfach herzustellende lösbare Verbindung von Schneckenwelle und Antriebswelle. Zum Einkuppeln wird die Schneckenwelle mit dem Einsteckende in die mit der Antriebswelle fest verbundene Kupplungsbüchse eingesteckt. Die Verbindung wird sodann hergestellt durch eine Verdrehung der über der Kupplungsbüchse gelagerten Kupplungsschale, wobei die in die Kupplungsschale eingesetzten Stellzapfen die Sperrklinken in der Weise in die Schließstellung verschieben, daß sie das Einsteckende der Schneckenwelle an der Ringschulter hintergreifen und verriegeln. Die Kupplungsvorrichtung ist aus nur wenigen Bauteilen zusammengesetzt und beansprucht keinen nennenswerten Einbau- oder Bewegungsraum. Sie wird in beiden Richtungen durch kurze Drehbewegungen betätigt, deren Länge mit den bogenförmigen Langlochöffnungen in den Sperrklinken vorgegeben ist. Die Kupplung ist daher besonders kostengünstig.

Die Erfindung wird nachfolgend anhand eines in der Zeichnung dargestellten Ausführungsbeispiels näher erläutert. Es zeigen
- Fig. 1:: eine sehr vereinfachte Längsschnittdarstellung von einer Spritzgießmaschine;
- Fig. 2:: die Kupplungsvorrichtung mit geschlossenen Sperrklinken im Längsschnitt;
- Fig. 3:: die Kupplungsvorrichtung mit geöffneten Sperrklinken im Querschnitt;
- Fig. 4:: die Kupplungsvorrichtung mit geschlossenen Sperrklinken im Querschnitt.

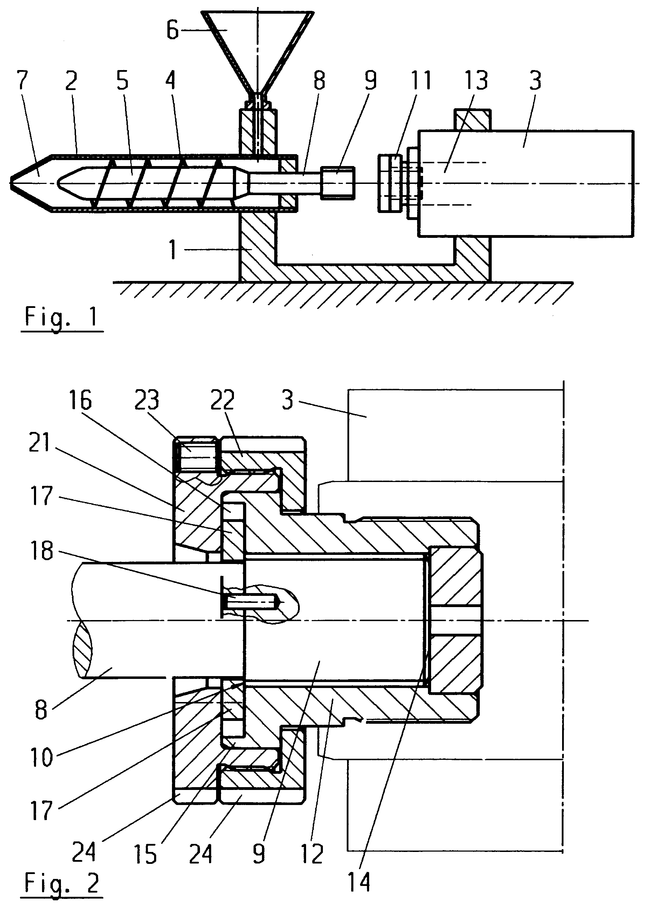

Die Darstellung von Fig. 1 ist auf die wesentlichen Bauteile der sog. Plastifiziereinheit einer Spritzgießmaschine beschränkt. In einem Rahmengestell 1 sind einerseits ein Extruder mit einem liegend angeordneten Massezylinder 2 und andererseits eine Antriebseinheit 3 gehaltert. In dem Massezylinder 2 ist eine mit einer Transportwendel 4 für das Spritzgut versehene Schneckenwelle 5 dreh- und axialverschiebbar gelagert, die aus betrieblichen Gründen von Zeit zu Zeit ausgewechselt werden muß, was ohne nennenswerten Zeitverlust erfolgen soll. Das Spritzgut wird über einen Fülltrichter 6 in den Massezylinder 2 eingefüllt und über einen Spritzkopf 7 am außenliegenden Ende in eine nicht dargestellte Spritzgießform ausgetragen.

Antriebsseitig weist der aus dem Massezylinder 2 austretende Wellenschaft 8 der Schneckenwelle 5 ein mit einer Außenverzahnung versehenes Einsteckende 9 auf, das mit größerem Durchmesser an einem von einer Ringschulter 10 gebildeten Absatz gegenüber dem Wellenschaft 8 abgesetzt ist.

Die in Fig. 1 mit 11 bezeichnete Kupplungsvorrichtung ist in Fig. 2 bis 4 im einzelnen dargestellt. Zur Verbindung des Einsteckendes 9 mit der Schneckenwelle 5 ist eine Kupplungsbüchse 12 am freien Ende der Antriebswelle 13 angeordnet, die eine mit der Außenverzahnung des Einsteckendes 9 korrespondierende Innenverzahnung aufweist, so daß die Schneckenwelle 5 mit dem Einsteckende 9 bis zu einem Anschlag 14 in die Öffnung der Kupplungsbüchse 12 eingesteckt werden kann. Die Kupplungsbüchse 12 besitzt auf der zur Schneckenwelle 5 gerichteten Seite einen äußeren Bundring 15, in dessen Stirnseite eine flache, kreisringscheibenförmige Ausnehmung 16 eingebracht ist. Diese ist für die Aufnahme zweier sichelförmiger, auf einem Teilkreis hintereinander angeordneter Sperrklinken 17 vorgesehen, die jeweils an ihrem gestreckten Ende an einer axialen Drehachse 18 innerhalb der Ausnehmung 16 gegeneinander schwenkbar gelagert sind. Am freien Ende jeder Sperrklinke 17 befindet sich eine bogenförmige Langlochöffnung 19, deren fiktiver Mittelpunkt sich jeweils exzentrisch zur Mittenachse der Antriebswelle 13 bzw. des Einsteckendes 9 der Schneckenwelle 5 befindet. Die bogenförmige Langlochöffnung 19 geht in ihrem gedanklich weitergeführten Verlauf über in eine zur Mittenachse gerichtete Spirale.

Die beiden Sperrklinken 17 sind mit axialgerichteten Stellzapfen 20 gegeneinander verschwenkbar, die diametral einander gegenüberliegend in eine den Bundring 15 der Kupplungsbüchse 12 an der Außenmantelfläche umfassende drehbare Kupplungsschale 21 eingesetzt sind und jeweils in eine der bogenförmigen Langlochöffnungen 19 der Sperrklinken 17 eingreifen. Die Sperrklinken 17 liegen in der Öffnungsstellung der Kupplung 11 mit ihrer Außenkontur am Innenrand der Ausnehmung 16 an, so daß sie nicht in die Öffnung der Kupplungsbüchse 12 hineinragen und den freien Durchtritt des Einsteckendes 9 der Schneckenwelle 5 behindern.

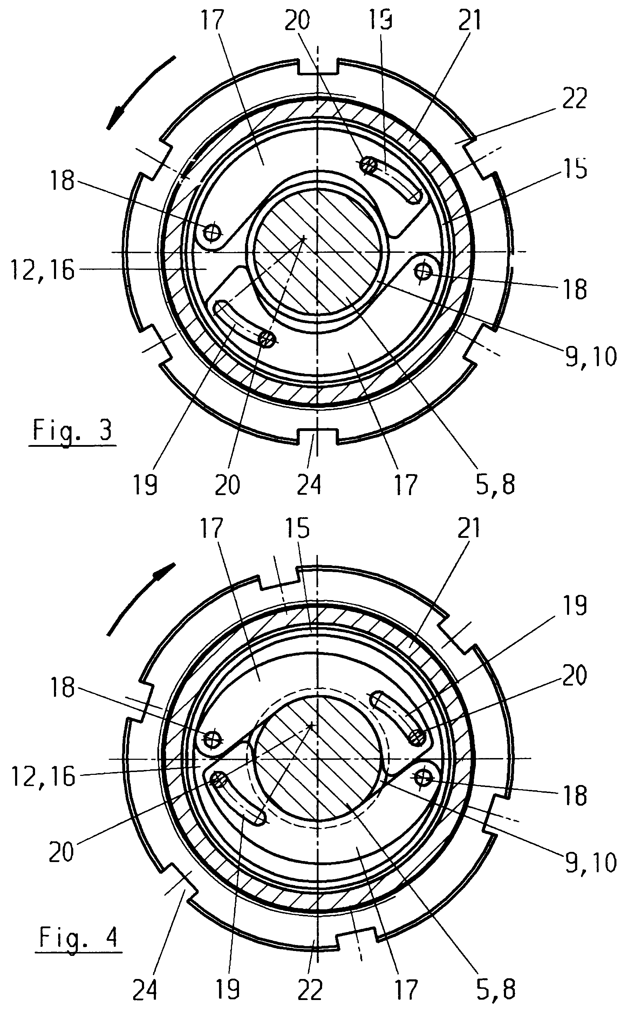

Bei einem Vergleich der Schnittdarstellungen von Fig. 3 und Fig. 4 wird deutlich, daß die Stellzapfen 20 bei einer Drehung der Kupplungsschale 21 in Umfangsrichtung innerhalb der bogenförmigen Langlochöffnungen 19 entlanggleiten. Dabei schwenken die Sperrklinken 17 entsprechend der spiralförmig zur Mittenachse hinweisenden Bahn nach innen, so daß sie das in die Kupplungsbüchse 12 eingeführte Einsteckende 9 der Schneckenwelle 5 an dem an der Ringschulter 10 gebildeten Absatz hintergreifen und stirnseitig an der Ringschulter 10 flächig anliegen. In der so erreichten Schließstellung umfassen die beiden Sperrklinken 17 den Wellenschaft 8 der Schneckenwelle 5 mit einer daran angepaßten Rundung. Die Kupplungsschale 21 deckt die in der Ausnehmung 16 schwenkbar gelagerten Sperrklinken 17 stirnseitig ab. Sie ist auf dem Bundring 15 der Kupplungsbüchse 12 mit einer Überwurfmutter 22 verschraubt. Eine Verdrehsicherung wird mit einem stirnseitig eingesetzten Gewindestift 23 vorgenommen.

Die Kupplungsschale 21 und die Überwurfmutter 22 besitzen am Außenumfang Hakennuten 24 für den Eingriff eines nicht dargestellten Hakenschlüssels zur wechselweisen Drehung der Kupplungsschale 21 in die Schließ- bzw. Eingriffsstellung. Die Drehbewegung wird durch die Sperrklinken 17 begrenzt, die in der Schließstellung den Wellenschaft 8 umfassen und in der Öffnungsstellung mit ihrer Außenkontur am Innenrand der Ausnehmung 16 anliegen. Durch den Anschlag 14 in der Kupplungsbüchse 12 ist sichergestellt, daß die Schneckenwelle 5 mit dem Einsteckende stets in eine solche Position eingesteckt werden kann, in der die Sperrklinken 17 das Einsteckende 9 widerstandsfrei an der Ringschulter 10 hintergreifen.

## Patentansprüche

1. Kupplungsvorrichtung für eine Spritzgießmaschine zum lösbaren Verbinden der Antriebswelle (13) mit einer axialverschiebbaren Schneckenwelle (5), die ein mit einer Außenverzahnung versehenes Einsteckende (9) aufweist, das mit einem an einer Ringschulter gebildeten Absatz mit größerem Durchmesser gegenüber dem Wellenschaft (8) der Schneckenwelle (5) abgesetzt und in eine eine korrespondierende Innenverzahnung aufweisende Kupplungsbüchse (12) der Antriebswelle (13) einsteckbar ist, dadurch gekennzeichnet, daß zwei sichelförmige Sperrklinken (17) in der Kupplungsbüchse (12) radial zueinander verschwenkbar gelagert und mit einer um die Kupplungsbüchse (12) drehbar angeordneten Kupplungsschale (21) in der Weise verbunden sind, daß axialgerichtete Stellzapfen (20), die diametral einander gegenüberliegend in die Kupplungsschale (21) eingesetzt sind, jeweils in eine bogenförmige Langlochöffnung (19) am freien Ende der Sperrklinke (17) eingreifen, so daß sie durch eine begrenzte Drehbewegung der Kupplungsschale (21) in die Eingriffsstellung einschwenkbar und durch eine entgegengerichtete Drehbewegung in die Öffnungsstellung ausschwenkbar sind, wobei die Sperrklinken (17) in der Eingriffsstellung das in die Kupplungsbüchse (12) eingeführte Einsteckende (9) an der Ringschulter (10) der Schneckenwelle (5) hintergreifen und stirnseitig anliegen.

2. Kupplungsvorrichtung nach Anspruch 1, dadurch gekennzeichnet, daß die Kupplungsbüchse (12) an der zur Schneckenwelle (5) gerichteten Seite einen Bundring (15) mit einer stirnseitigen, kreisringscheibenförmigen Ausnehmung (16) zur Aufnahme der Sperrklinken (17) aufweist, wobei die Kupplungsschale (21) den Bundring (15) an der Außenmantelfläche drehbar umfaßt.

3. Kupplungsvorrichtung nach den Ansprüchen 1 und 2, dadurch gekennzeichnet,daß die Sperrklinken (17) jeweils um eine an ihrem gestreckten Ende angeordnete axiale Drehachse (18) innerhalb der Ausnehmung (16) schwenkbar gelagert sind, wobei sie in der Öffnungsstellung mit ihrer Außenkontur am Innenrand der Ausnehmung (16) anliegen und in der Eingriffsstellung den Wellenschaft (8) der Schneckenwelle (5) mit einer daran angepaßten Rundung umfassen.

4. Kupplungsvorrichtung nach den Ansprüchen 1 bis 3, dadurch gekennzeichnet, daß die Kupplungsschale (21) die Ausnehmung (16) für die Sperrklinken (17) in der Klupplungsbüchse (12) stirnseitig abdeckt und von einer aufgeschraubten Überwurfmutter (22) auf dem Bundring (15) drehbar gehalten ist.

## Claims

1. A coupling device for an injection moulding machine for releasably connecting the drive shaft (13) to an axially displaceable screw shaft (5) having an insertion end (9) which is provided with an eternal tooth configuration and which is stepped with a step formed at an annular shoulder of larger diameter relative to the shaft shank portion (8) of the screw shaft (5) and can be fitted into a coupling sleeve (12) of the drive shaft (13), the coupling sleeve having a corresponding internal tooth configuration, characterised in that two sickle-shaped locking pawls (17) are mounted in the coupling sleeve (12) pivotably radially relative to each other and are connected to a coupling shell (21) arranged rotatably about the coupling sleeve (12), in such a way that axially directed setting pins (20) which are fitted into the coupling shell (21) in diametrally mutually opposite relationship each engage into an arcuate slot opening (19) at the free end of the respective locking pawl (17) so that they can be pivoted into the engagement position by a limited rotary movement of the coupling shell (21) and can be pivoted out into the open position by an oppositely directed rotary movement, wherein in the engagement position the locking pawls (17) engage behind the insertion end (9) which is inserted into the coupling sleeve (12) at the annular shoulder (10) of the screw shaft (5) and bear against the face thereof.

2. A coupling device according to claim 1 characterised in that at the side directed towards the screw shaft (5) the coupling sleeve (12) has a collar (15) with an opening (16) in its end face, in the form of an annular disc, for receiving the locking pawls (17), wherein the coupling shell (21) rotatably embraces the collar (15) at the outside peripheral surface.

3. A coupling device according to claims 1 and 2 characterised in that the locking pawls (17) are each mounted within the opening (16) pivotably about an dial axis of rotation (18) arranged at their extended end, wherein in the open position they bear with their outside contour against the inside edge of the opening (16) and in the engagement position they embrace the shaft shank portion (8) of the screw shaft (5) with a rounded configuration which is etched thereto.

4. A coupling device according to claims 1 to 3 characterised in that the coupling shell (21) covers over the opening (16) for the locking pawls (17) in the coupling shell (12) at the end thereof and is rotatably held on the collar (15) by a cap nut (22) which is screwed on.

## Revendications

1. Dispositif d'accouplement pour une machine à mouler par injection, permettant d'établir une liaison séparable entre l'arbre d'entraînement (3) et un arbre à vis (5) coulissant axialement et présentant à son extrémité un embout d'emmanchement (9) portant une denture externe, cet embout, qui est étagé par rapport à la tige de l'arbre (8) de la vis sans fin (5) avec un talon formé d'un épaulement annulaire d'un plus grand diamètre, est susceptible d'être emmanché dans une douille d'accouplement (12) de l'arbre d'entraînement (13), équipée d'une denture interne, ce dispositif présentant les caractéristiques suivantes :
- dans la douille d'accouplement (12) sont montés deux cliquets d'arrêt (17) en forme de faucille, pouvant basculer radialement l'un vers l'autre ;
- les cliquets (17) sont reliés par une coquille d'accouplement (21) pouvant tourner autour de la douille d'accouplement (12) de manière que des broches de positionnement (20), montées en des positions diamétralement opposées dans la coquille (21) sont en prise chacune avec une boutonnière (19) en arc de cercle située à l'extrémité libre d'un cliquet d'arrêt (17) ;
- une rotation limitée de la coquille d'accouplement (21) amène les cliquets (21) par pivotement en prise tandis qu'une rotation en sens inverse les amène en position d'ouverture ;
- les cliquets (17), en position de prise, sont en appui frontal sur l'embout (9) emmanché dans la douille d'accouplement (12) par derrière et le long de l'épaulement annulaire (10) de l'arbre à vis (5).

2. Dispositif d'accouplement selon la revendication 1, caractérisé en ce que la douille d'accouplement (12) présente, sur le côté dirigé vers l'arbre à vis sans fin (5) un collet annulaire (15) dont la face frontale présente un évidement (16) en forme d'anneau circulaire plat servant de logement aux cliquets d'arrêt (17), la coquille d'accouplement (21) pouvant tourner le long de la paroi externe du collet annulaire (15).

3. Dispositif d'accouplement selon les revendications 1 et 2, caractérisé en ce que chacun des cliquets d'arrêt (17) peut basculer autour d'un axe de rotation (18) monté axialement, vers une extrémité du cliquet, dans l'évidement (16) de sorte que les cliquets, en position d'ouverture, sont en appui par leurs contours extérieurs le long du bord interne de l'évidement (16) tandis qu'en position de prise, ils entourent la tige (8) de l'arbre à vis sans fin (5) par leur partie arrondie en correspondance avec cette tige.

4. Dispositif d'accouplement selon les revendications 1 à 3, caractérisé en ce que la coquille d'accouplement (21) recouvre frontalement l'évidement (16) servant de logement aux cliquets d'arrêt (17) à l'intérieur de la douille d'accouplement (12) et est maintenue) tout en pouvant tourner, sur le collet annulaire (15) par un écrou d'accouplement (22).
